# EUROPEAN PATENT SPECIFICATION

(11) **EP 2 919 575 B1**
(45) Date of publication and mention of the grant of the patent: **04.12.2019**
(21) Application number: 13821981.1
(22) Date of filing: 28.10.2013
(51) Int. Cl.: A01D 41/14

(54) **CUTTING/MOWING, CONDITIONING, WINDROWING MACHINE**
MASCHINE ZUM SCHNEIDEN/MÄHEN, KONDITIONIEREN UND SCHWADEN
MACHINE D'ANDAINAGE, DE CONDITIONNEMENT ET DE COUPE/FAUCHAGE

(30) Priority: 13.11.2012 IT PD20120346
(43) Date of publication of application: 23.09.2015
(73) Proprietor: Marangon Srl, 35010 San Giorgio In Bosco (PD) (IT)
(72) Inventor: MARANGON, Giulio, 35010 San Giorgio In Bosco (PD) (IT)
(74) Representative: Vinci, Marcello
(86) International application number: PCT/IB2013/059708
(87) International publication number: WO 2014/076600

(56) References cited:
- EP-A1- 0 491 405
- EP-A1- 2 095 703
- EP-A1- 2 446 729
- US-A- 5 673 543
- US-A1- 2004 123 575
- US-A1- 2011 078 988

## Description

The present invention concerns transported agricultural cutting and mowing machines, and in particular it concerns a new transported cutting/mowing machine provided with a cutting head that is divided into sections and suited to be folded.

Cutting/mowing machines are known, meaning transported agricultural machines that are moved by agricultural tractors or harvesters and are commonly used to cut vegetables having various sizes.

Various types of cutting/mowing machines are known, varying according to the application for which they are intended: they are generally used for mowing grass, in orchards, on road edges and on grass-covered areas in general.

Fixed cutting machines are known, which can be towed and lifted by means of the special hydraulic hoist of the tractor or harvester; other cutting machines are semi-fixed, meaning that they can move travelling parallel to the ground and crosswise with respect to the advance direction of the machine. This function is particularly useful, for example, in orchards, as it makes it possible to cut the grass around each individual plant with precision.

Cutting machines are also known that are connected to the tractor or harvester by means of an articulated telescopic arm that moves the cutting machine according to various inclinations.

The latter are widely used to remove plants from slight slopes at the sides of country roads and even to prune plants.

Cutting and mowing machines are known that comprise a cutting head constituted by a frame with centre coupling, for example a pendulum coupling with suspension, a cutting unit, an auger and at least one cardan connection to the power takeoff of the tractor or harvester.

The cutting unit in turn comprises a plurality of rotary knives mounted on discs aligned on a bar that is generally arranged crosswise with respect to the direction of advance of the machine, a train of gears suited to cause the simultaneous rotation of said knives and means or members for connecting said gears to the power takeoff of the tractor or harvester.

Said connection means or members comprise at least one shaft mechanically connected to said cardan connection of the machine.

The cutting head also comprises at least one auger arranged crosswise with respect to the direction of advance of the machine, that is, parallel to said bar of the cutting unit and in a backward position.

Said auger is mechanically connected to the power takeoff of the tractor or harvester through said cardan connection.

The material cut by the knives is thrust towards the back of the machine, from where the auger conveys it towards a collection point where said material can be accumulated inside a container or unloaded.

The circulation of agricultural machines on roads is regulated by rules that establish also the limit sizes and masses for circulation on roads. The agricultural machines whose sizes or masses exceed the limit values are considered exceptional machines, therefore they can circulate on roads only with a specific authorization.

There is also a further width limit value beyond which the machine can circulate on roads only if accompanied by escorting vehicles preceding it.

Furthermore, towed agricultural machines, when they are not used, are stored in special depots that must be extremely large in order to accommodate said machines.

The width of known cutting or mowing machines is generally sized in such a way as to optimize the overall dimensions of the machine as a whole, so that it is not too difficult to manoeuvre and to drive in general, considering also the need to reduce the number of passes on the area where it is used.

In general, the optimal width value is approximately 6 m.

A drawback posed by the cutting or mowing machines of the known type lies in that said widths of the machines cause problems related to the space occupied in the depots and to the transport and circulation of said machines on roads, for the reasons already explained above. US2011 /078988 discloses a head for farm machines of the type described in the preamble of claim 1.

In order to overcome said drawbacks, a new type of cutting/mowing machine with divided and foldable cutting head has been designed and implemented.

The main object of the present invention is to reduce the overall dimensions of the machine, especially for transport and circulation on roads, when it is not used, and when it must be stored.

It is another object of the present invention to provide an optimal operating width to reduce the number of passes on the area to be processed.

It is another object of the present invention to provide a cutting/mowing machine whose operation is completely automated.

These and other direct and complementary objects are achieved by the new type of cutting/mowing machine provided with a divided and foldable cutting head, with cardan connection to the power takeoff of the tractor or harvester, wherein said cutting head is divided into at least two sections hinged to each other, suited to mutually rotate from an open position, in which they are substantially aligned so as to form the cutting head, to a folded closed position, in which at least one of said sections is rotated with respect to the other on a substantially horizontal axis, in such a way as to reduce the overall width of the head.

In the preferred solution, said head comprises at least one fixed section, comprising said cardan connection, and at least one moveable section that rotates around said axis until it reaches the closed position, in which said moveable section preferably overlaps and is substantially parallel to said fixed section.

Each section of said cutting head in turn comprises at least one frame, at least one segment of cutting unit, at least one auger segment and connection means or members suited to connect each one of said segments to the corresponding segments of the adjacent section, for the transmission of motion, simultaneous and synchronized, from one section to the other.

The sections are hinged to each other through the respective frames and comprise members suited to move one or more sections with respect to the others. Said members properly comprise fluid-dynamic cylinders mounted on the frames of the sections and connected to the circuit of the tractor or harvester.

Said segment of the cutting unit of each section in turn comprises a plurality of rotary knives mounted on discs that are aligned on a bar constrained to the frame of the respective section, and a train of gears suited to cause the simultaneous rotation of said knives.

Said segment of the cutting unit comprises a drive shaft connected to said gears and suited to be also connected to the shaft of the adjacent section.

Each segment of auger is in turn constrained to said frame of the corresponding section and comprises members for connection to said drive shaft and furthermore comprises members for connection to the auger segment of the adjacent section.

In the preferred solution, the auger segment of each section comprises, at the ends connected to the auger segment of the adjacent section, a coupling member, or quick coupling, described in greater detail and claimed here below, suited to provide the mechanical connection with a corresponding quick coupling located at the corresponding end of the auger segment of the adjacent section. Analogously, also the drive shaft of the segment of cutting unit of each section comprises quick couplings for mechanical connection with the shaft of the adjacent section.

In this way, when said sections are aligned in the open position, so as to form the cutting head, all the segments of the cutting units and of the augers of all the sections are mechanically connected to one another, wherein at least one of said sections is connected to the power takeoff of the tractor or harvester, through the cardan connection, and transfers motion to all the other sections.

In particular, said drive shafts are all aligned with and connected to one another and said auger segments are all aligned with and connected to one another.

In this way, all the sections of the cutting head operate at the same time and in a synchronized manner, like a cutting head constituted by a single section.

An advantage offered by this solution lies in that the cutting head, when it is not used, for example during circulation on roads or when it is stored in the depot, can be folded in the closed position with minimum overall dimensions, by making one or more of said sections rotate with respect to a fixed section, actually compacting the width of the cutting head.

The overall width of the cutting head in the closed folded position can be even halved with respect to the overall width of the cutting head when it is in the open operating position.

According to the invention, furthermore, the new cutting/mowing machine with divided and foldable cutting head can also be used in the semi-closed position, that is, using only one or more sections in the operating position and leaving one or more sections in the closed position. In this way, the machine can be used, for example, also in limited spaces that it could not access in the completely open position.

The characteristics of the new cutting/mowing machine will be highlighted in greater detail in the following description, with reference to the drawings attached hereto as non-limiting examples.
Figure 1 shows a three-dimensional view of a cutting head A of the mowing/cutting machine in the completely open position.
Figures 1a, 1b, 1c, 1d and 1e respectively show five views, namely a three-quarters view, a rear view, a side view, a front view and a bottom view of the cutting head A in the completely open position, comprising a fixed centre section A1 and two moveable lateral sections A2, A3, respectively right and left when observing the head frontally.
Figure 2 shows a three-dimensional view of a cutting head A of the mowing/cutting machine in the closed position.
Figures 2a, 2b, 2c, 2d show four views, respectively a top view, a rear view, a side view and a front view of the cutting head A in the closed position.

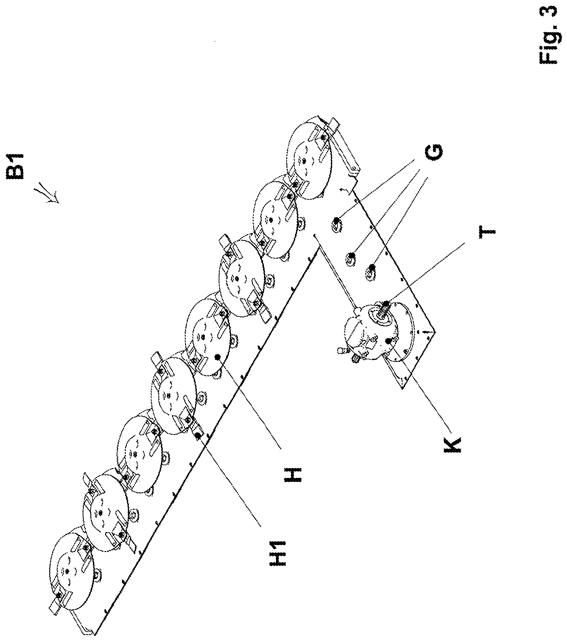

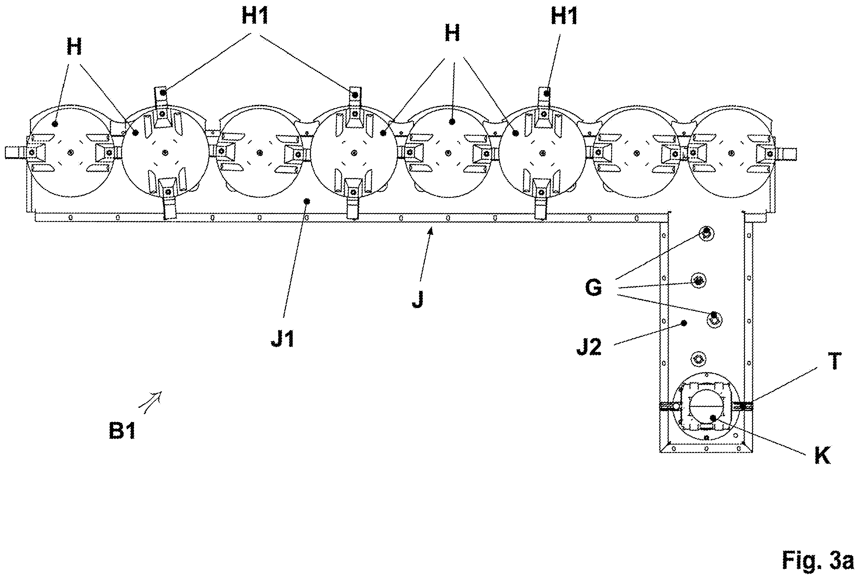

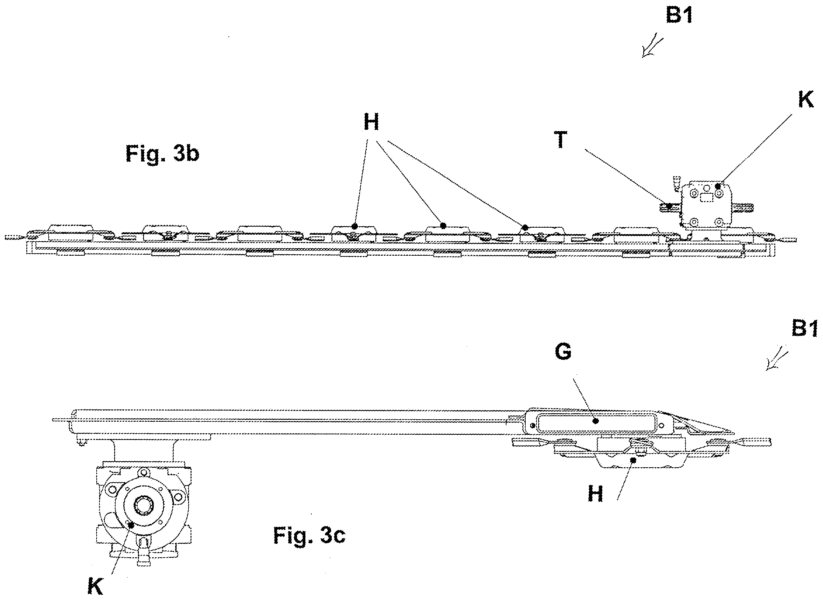

Figure 3 shows a three-dimensional view of the cutting unit B1 of the centre section A1 of the cutting head A, while Figures 3a, 3b and 3c show three views, respectively a top view, a rear view and a side view of the cutting unit B1.

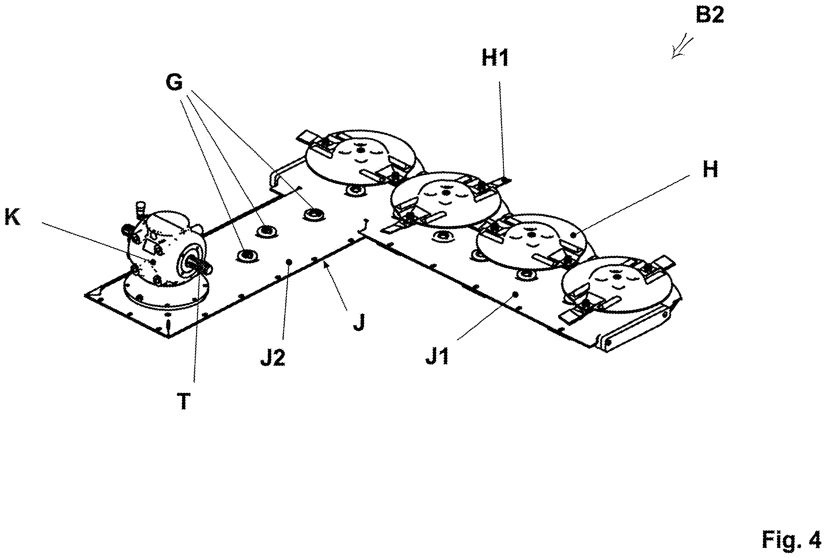

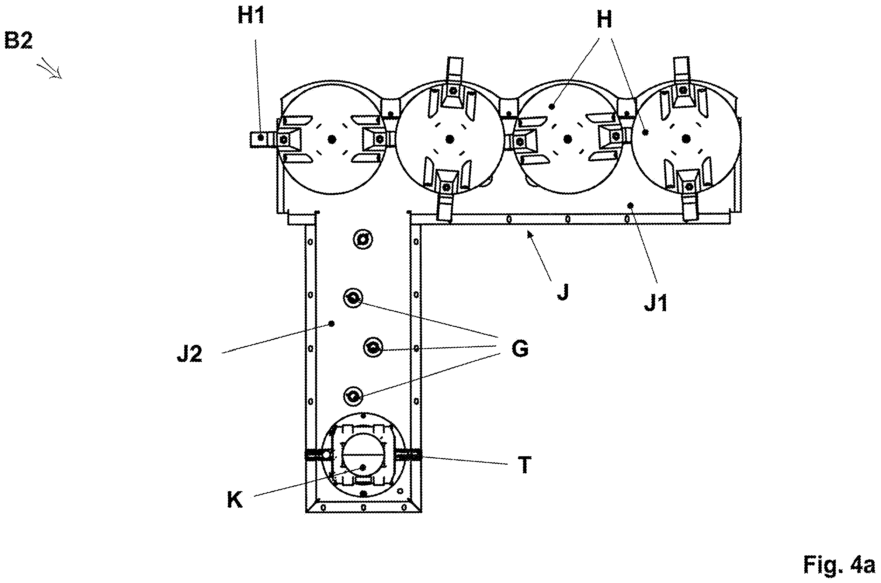

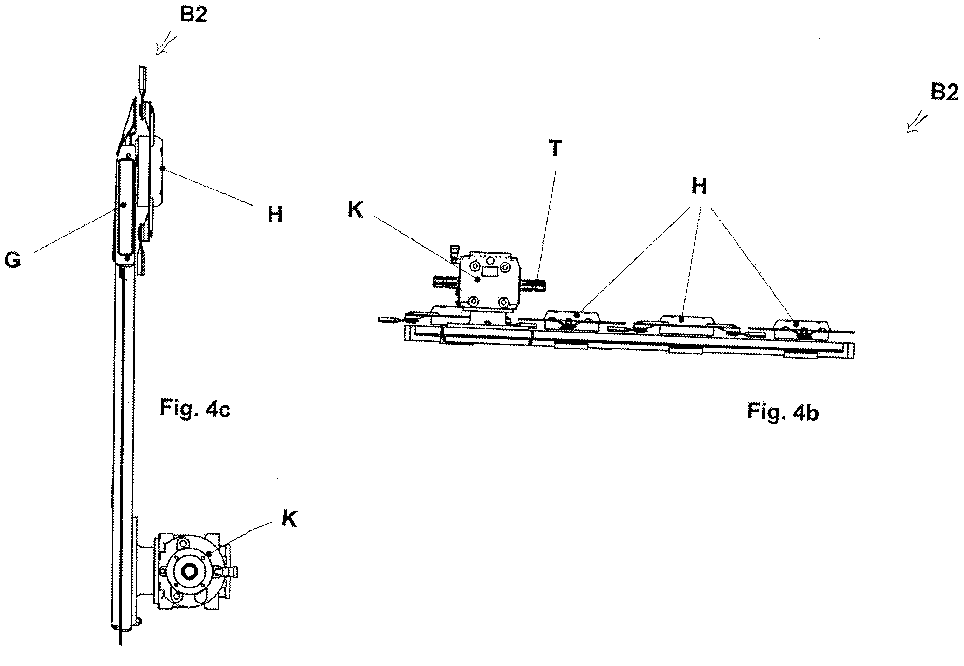

Figure 4 shows a three-dimensional view of the cutting unit B2 of a lateral section A2 of the cutting head A, while Figures 4a, 4b and 4c show three views, respectively a top view, a rear view and a side view of said segment of the cutting unit B2.
Figures 5 and 5a respectively show a three-dimensional view and a front view of a quick coupling D for mechanical connection between an auger segment C1, C2, C3 of a section A1, A2, A3 and the auger segment C1, C2, C3 of the adjacent section A1, A2, A3 or between the drive shaft T of the gears G of the cutting unit B1, B2, B3 of a section A1, A2, A3 and the drive shaft T, TA1, TA2, TA3 of the gears G of the cutting unit B1, B2, B3 of the adjacent section A1, A2, A3.

The invention is a mowing/cutting machine comprising a divided and foldable cutting head A, provided with at least one cardan connection E to the power takeoff of the tractor or harvester, not illustrated in the figure.

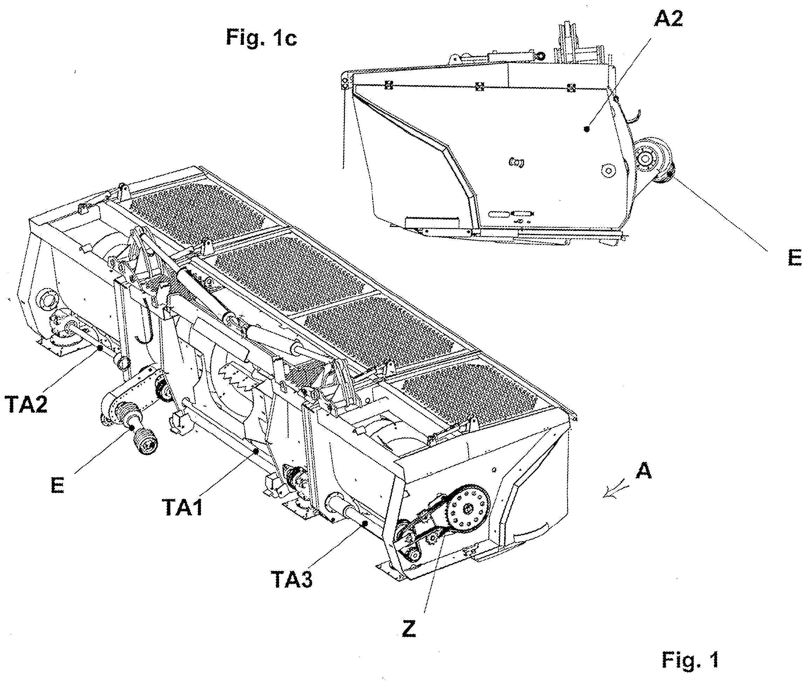

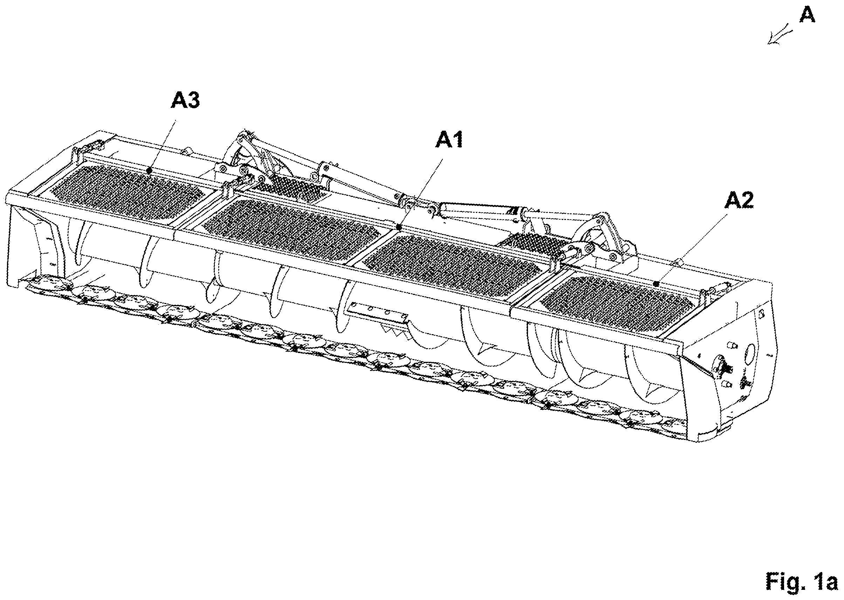

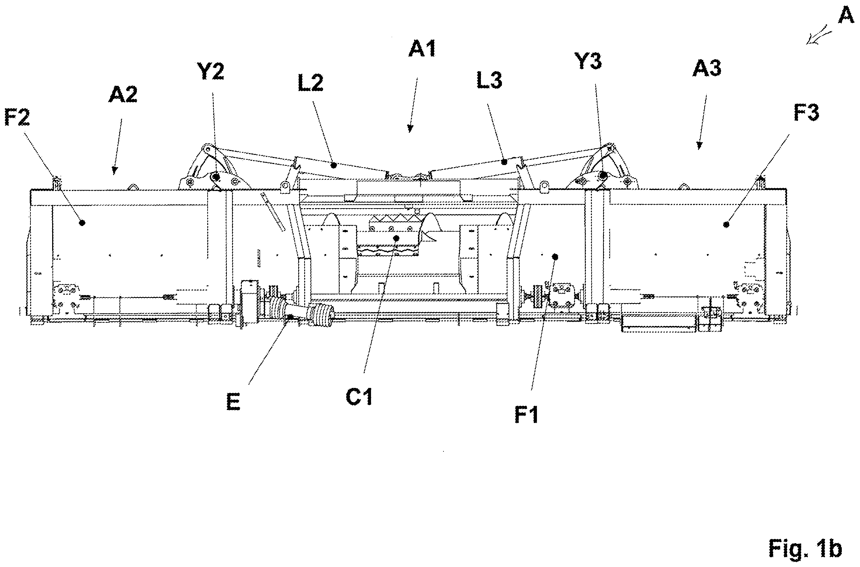

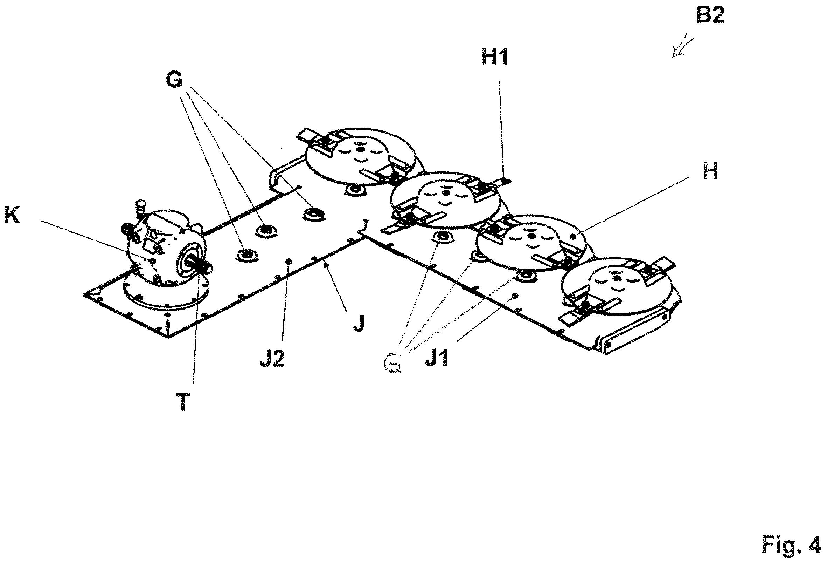

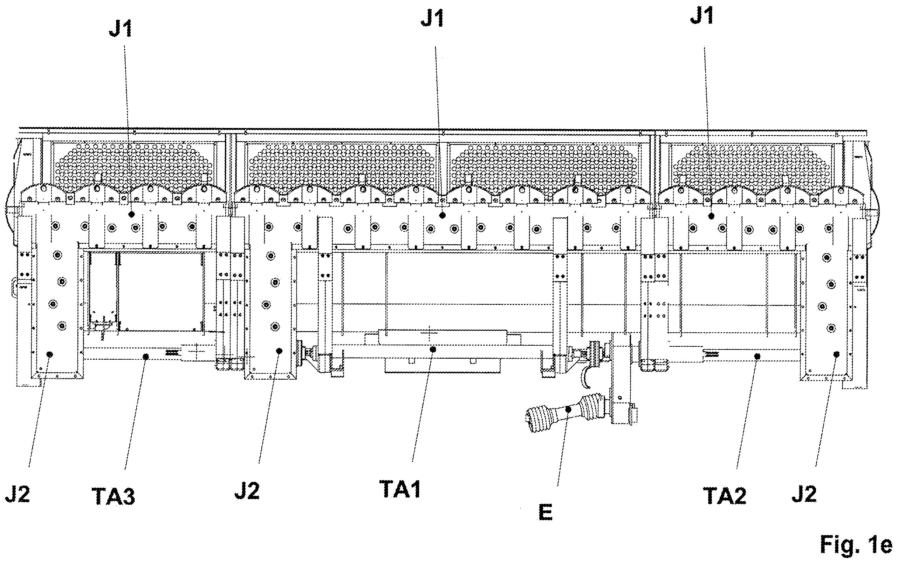

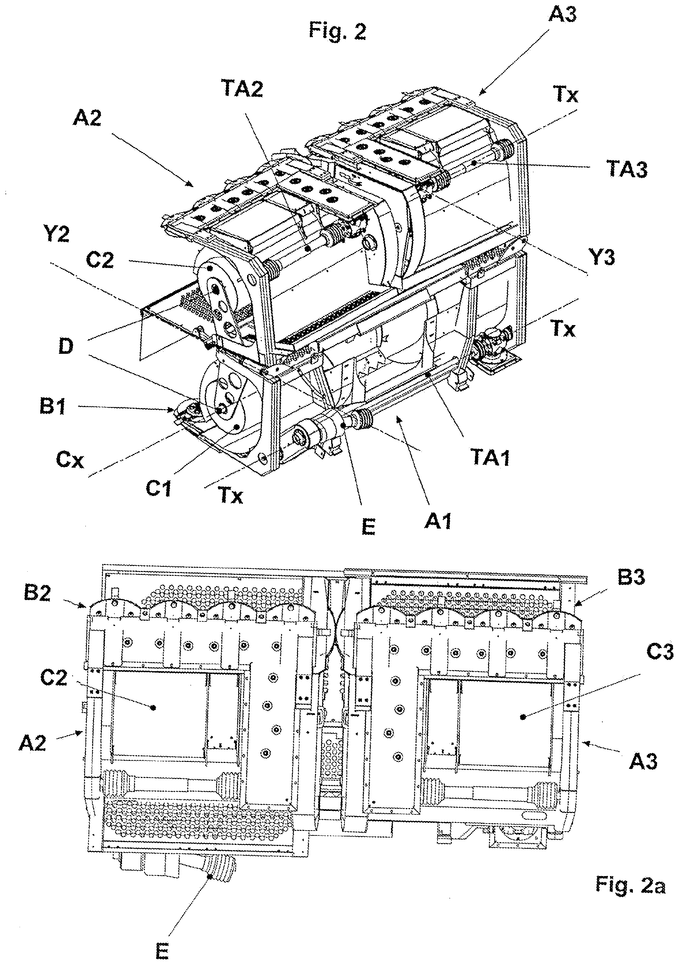

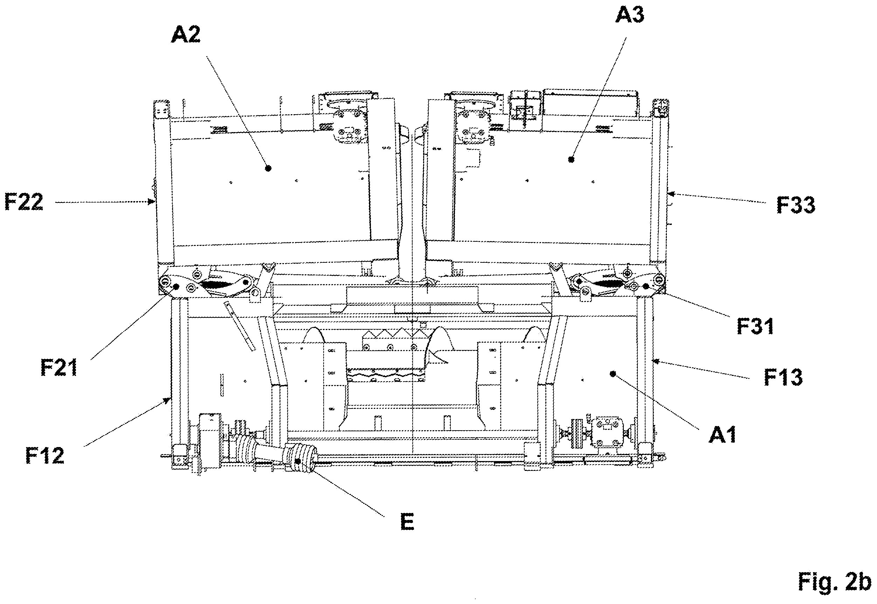

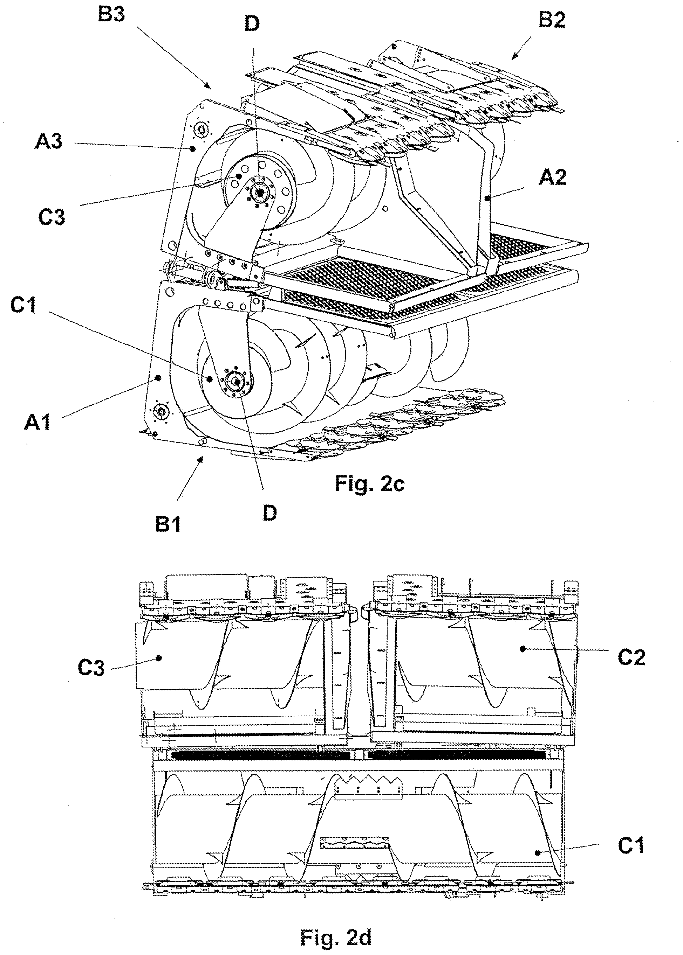

Said cutting head A comprises two sections A2, A3 hinged to each other in the centre part A1, suited to mutually rotate from an open position (Figure 1), in which they are substantially aligned so as to form the cutting head A, to a closed folded position (Figure 2), in which at least one of said sections A2, A3 is rotated with respect to the other on a substantially horizontal axis Y2, Y3, in such a way as to reduce the overall width of the head A.

In the solution shown in the figures, said head A comprises a fixed centre section A1, comprising said cardan connection E, and one pair of moveable lateral sections, a right one A2 and a left one A3.

In the closed position shown in Figure 2, said moveable lateral sections A2, A3 are rotated by 180° around corresponding rotation axes Y2, Y3 substantially parallel to the advance direction, thus overlapping and being substantially parallel to said fixed centre section A1.

Each section A1, A2, A3 of said cutting head A in turn comprises at least one frame F1, F2, F3, at least one segment of cutting unit B1, B2, B3, at least one segment of auger C1, C2, C3, as well as means or members for transmitting motion G, K, T and for connecting D each one of said segments B1, B2, B3, C1, C2, C3 to the corresponding segments B1, B2, B3, C1, C2, C3 of the adjacent section, for transmitting motion, simultaneous and synchronized, from one section to the other when said head A is in the open position.

When one or more sections A2, A3 are, instead, in the closed rotated position, the mechanical connection to the corresponding closed section A2, A3 is interrupted, meaning that also the transmission of motion is interrupted.

The sections A1, A2, A3 are hinged to one another through their respective frames F1, F2, F3. Said frames F2, F3 of the right and left moveable lateral sections A2, A3 are both hinged F21, F31 in specular positions to the frame F1 of said fixed centre section A1, and in particular at the level of the upper part of the frames F1, F2, F3, in proximity to the corresponding facing edges F12, F22; F13, F33.

Each lateral section A2, A3 can be rotated with respect to said centre section A1 around substantially horizontal axes Y1, Y2 parallel to the advance direction of the machine.

The rotation of said sections is controlled by means of moving members L2, L3, said members L2, L3 comprising fluid-dynamic cylinders mounted and hinged between said frame F1 of the fixed section A1 and said frames F2, F3 of the moveable lateral sections A2, A3.

The segment of the cutting unit B1, B2, B3 of each section A1, A2, A3 in turn comprises a plurality of rotary knives H1 mounted on discs H aligned on a segment J1 of a bar J that is constrained to the frame F1, F2, F3 of the corresponding section, and a train of gears G suited to cause the simultaneous rotation of said knives HI.

Each one of said bars J is substantially L-shaped and comprises a main portion J1 on which said discs H and said gears G are mounted, arranged horizontally and crosswise with respect to the direction of advance of the machine, and a connecting portion J2, on which there are the motion transmission members K connected to said gears G, and the drive shaft T suited to be also connected to the shaft TA1, TA2, TA3 of the adjacent section. Said drive shaft T is in a backward position with respect to said rotary knives HI and is substantially horizontal and transversal to the direction of advance of the machine.

Each auger segment C1, C2, C3 is in turn constrained to said frame F1, F2, F3 of the corresponding section, is arranged horizontally and crosswise with respect to the direction of advance of the machine and comprises belts Z or members for connection to said drive shaft TA1, TA2, TA3 of the corresponding section A1, A2, A3.

Each auger segment C1, C2, C3 comprises also members D for connection to the auger segment of the adjacent section, wherein each connection member of quick coupling D is mounted at one of the connection ends between adjacent auger segments C1, C2, C3.

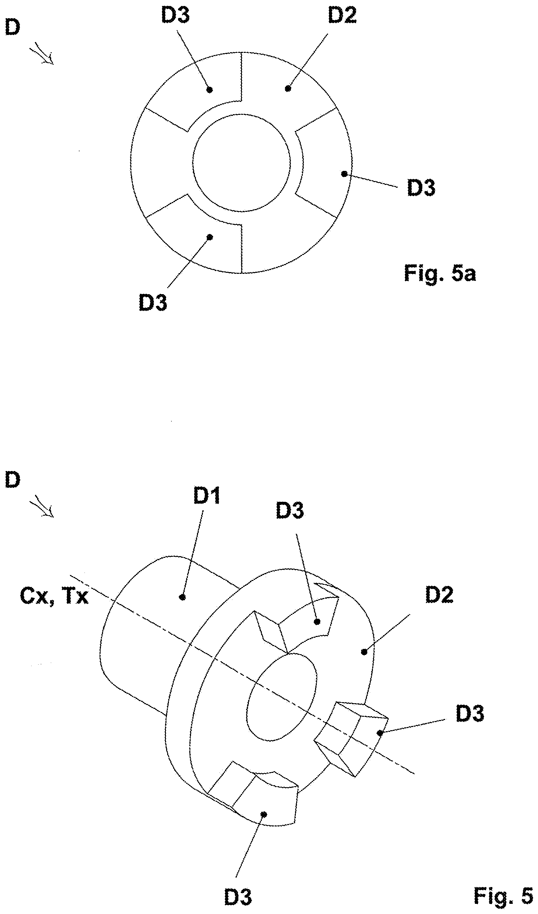

An example of embodiment of said quick coupling D is shown in Figures 5 and 5a. Said quick coupling D comprises a portion D1 suited to be fixed to the end of the shaft TA1, TA2, TA3 or to the end of the auger segment C1, C2, C3, said fixing portion D1 being, for example, substantially cylindrical and suited to be coaxially constrained to the auger segment C1, C2, C3.

Said fixing portion D1 is integral with a substantially plane circular portion D2 suited to lie substantially crosswise with respect to the axis Cx, Tx of the auger segment C1, C2, C3 or of the drive shaft TA1, TA2, TA3, and wherein preferably two or more teeth D3 suited to mesh with the teeth D3 of the quick coupling D mounted at the end of the adjacent auger are distributed on said plane circular portion D2.

Thanks to the quick coupling D, the axial rotation of an auger segment, and in particular of the auger segment C1 of the centre section A1, is transmitted to the auger segments C2, C3 of the lateral sections A2, A3.

According to the invention, also said drive shafts T, TA1, TA2, TA3 suited to transmit motion to said rotary knives H1 comprise said quick couplings for the mechanical connection to the shafts T, TA1, TA2, TA3 of the adjacent sections.

In this way, when said sections A1, A2, A3 are aligned in the open position shown in Figure 1, all the segments of the cutting units B1, B2, B3 and of the augers C1, C2, C3 are mechanically connected to one another, wherein said fixed centre section A1 is connected to the power takeoff of the tractor through the cardan connection E, so that motion is then transferred to said lateral sections A2, A3 simultaneously and in a synchronized manner.

Therefore, with reference to the above description and the attached drawings, the following claims are expressed.

## Claims

1. Cutting/mowing, conditioning, windrowing machine, comprising a cutting head (A) provided with: a cardan connection (E) to the power takeoff of the tractor or harvester, at least one cutting unit (B1, B2, B3) with rotary knives (H1) and at least one auger (C1, C2, C3), **wherein** said cutting head (A) is divided into at least two sections (A1, A2, A3) hinged to each other, each with a corresponding cutting unit (B1, B2, B3) and auger (C1, C2, C3), wherein at least one section (A1) is anchored to the tractor or the harvester and comprises at least one cardan connection (E), and wherein at least one section is moveable (A2, A3), being suited to rotate substantially by 180° with respect to said fixed section (A1) from an open operating position, in which all of said sections (A1, A2, A3) are substantially aligned in a transversal direction with respect to the advance direction of the machine, to a closed folded position, in which at least one of said moveable sections (A2, A3) is rotated with respect to the other, in order to reduce the overall width of the cutting head (A) as said moveable section (A2, A3) substantially overlaps said fixed section (A1), wherein said segment of the cutting unit (B1, B2, B3) of each section (A1, A2, A3) in turn comprises:
• a plurality of rotary knives (H1) mounted on discs (H) that are aligned on a segment (J1) of a bar (J) constrained to the frame (F1, F2, F3) of the corresponding section;
• a train of gears (G) suited to cause the simultaneous rotation of said knives (H1); **characterized in that**
• said bar (J), which is substantially L-shaped and comprises a main portion (J1) on which said discs (H) and said gears (G) are mounted, arranged horizontally and crosswise with respect to the advance direction of the machine, and a connecting portion (J2) provided with the members for transmitting motion among the various sections, connected to said gears (G) and to the gear box (K), as well as the drive shaft (T) that is suited to be connected to the shafts (T, TA1, TA2, TA3) of the adjacent sections through connection members.

2. Machine according to claim 1, **characterized in that** it comprises a fixed centre section (A1), comprising said cardan connection (E), and one pair of moveable lateral sections, a right one (A2) and a left one (A3), suited to substantially rotate by 180°.

3. Machine according to claim 1, **characterized in that** said devices for anchorage to the tractor or harvester, comprise translation devices suited to center the folded head (A)

4. Machine according to claims 1, 2, **characterized in that** said moveable sections (A2, A3) rotate with respect to said fixed section (A1) on corresponding rotation axes (Y2, Y3) that are substantially horizontal and parallel to said advance direction.

5. Machine according to the preceding claims, **characterized in that** each section (A1, A2, A3) of said cutting head (A) in turn comprises at least one frame (F1, F2, F3), at least one cutting unit segment (B1, B2, B3), at least one auger segment (C1, C2, C3) and means or members for transmitting motion (G, K, T) and means or members for connecting (D) said cutting units (B1, B2, B3) and said augers (C1, C2, C3) for the transmission of motion, simultaneous and synchronized, from said fixed section (A1) to the other sections (A2, A3) when said head (A) is in the open position.

6. Machine according to the preceding claims, **characterized in that** said sections (A1, A2, A3) are hinged to one another through the respective frames (F1, F2, F3), and wherein the rotation of said sections (A1, A3) is controlled via moving members (L2, L3), said members (L2, L3) comprising fluid-dynamic cylinders mounted on said frames (F1, F2, F3) of the sections (A1, A2, A3).

7. Machine according to claim 1 or 5, **characterized in that** said members or gear boxes (K) are overgears or reduction gears.

8. Machine according to the preceding claims, **characterized in that** said auger segment (C1, C2, C3) of each section (A1, A2, A3) is in turn constrained to said frame (F1, F2, F3) of the corresponding section, and said section is arranged horizontally and crosswise with respect to the direction of advance of the machine, and comprises chains or belts or members for connection to the auger of the adjacent section.

9. Machine according to claim 5, **characterized in that** said connection members or quick couplings (D) are mounted at the connection ends between adjacent auger segments (C1, C2, C3) and at the connection ends between adjacent drive shafts (TA1, TA2, TA3).

10. Machine according to the preceding claims, **characterized in that** it comprises a belt (Z) or chain suited to transmit motion from the shaft (TA2, TA3) to the auger positioned in an external section (A2, A3).

11. Machine according to claim 5 or 9, **characterized in that** said quick coupling (D) comprises:
• a portion (D1) suited to be fixed to the end of the auger segment (C1, C2, C3) or of the shaft (T);
• a substantially plane circular portion (D2) integral with said fixing portion and suited to lie substantially crosswise with respect to the axis (Cx, Tx) of the auger segment (C1, C2, C3) or to the shaft (T, TA1, TA2, TA3);
• two or more teeth (D3) distributed on said circular plane portion (D2) and suited to mesh with the teeth of the quick coupling (D) mounted at the end of the adjacent auger for transmitting the axial rotation from one auger to the other,
and wherein, when said sections (A1, A2, A3) are aligned in the open position, said segments of the cutting units (B1, B2, B3) and of the augers (C1, C2, C3) of all the sections are mechanically connected to one another via said quick couplings (D).

12. Machine according to the preceding claims, **characterized in that** in said open position said drive shafts (T) of all the sections (A1, A2, A3) are connected to one another and aligned crosswise to said advance direction and said auger segments (C1, C2, C3) of all the sections (A1, A2, A3) are connected to one another and aligned crosswise to said advance direction.

13. Machine according to claim 5, **characterized in that** said augers of the lateral sections (A2, A3) are hinged only to the external walls of the corresponding frames (F1, F2, F3).

14. Machine according to claim 5 or 9 or 11, **characterized in that** it comprises a further hydraulic or electric motor integral with one of the external sides of the external sections (A2, A3) in order to obtain the reverse motion for the initial connection of said quick couplings (D).

## Patentansprüche

1. Maschine zum Schneiden/Mähen, Aufbereiten und Schwaden, einen Schneidkopf (A) umfassend, der Folgendes aufweist: eine Kardanverbindung (E) zur Zapfwelle des Traktors oder Mähdreschers, wenigstens eine Schneideeinheit (B1, B2, B3) mit Drehmessern (H1) und wenigstens eine Schnecke (C1, C2, C3), **wobei** der besagte Schneidkopf (A) in wenigstens zwei aneinander angelenkte Abschnitte (A1, A2, A3) unterteilt ist, von denen jeder eine entsprechende Schneideeinheit (B1, B2, B3) und Schnecke (C1, C2, C3) umfasst, **wobei** wenigstens ein Abschnitt (A1) am Traktor oder Mähdrescher verankert ist und wenigstens eine Kardanverbindung (E) umfasst, und wobei wenigstens ein Abschnitt beweglich (A2, A3) und dazu geeignet ist, sich bezüglich des besagten feststehenden Abschnitts (A1) im Wesentlichen um 180° aus einer offenen Betriebsposition, in der alle besagten Abschnitte (A1, A2, A3) im Wesentlichen in einer Richtung ausgerichtet sind, die quer zur Fahrtrichtung der Maschine verläuft, in eine geschlossene, zusammengeklappte Position zu drehen, in der wenigstens einer der besagten, beweglichen Abschnitte (A2, A3) bezüglich des anderen gedreht ist, um die Gesamtbreite des Schneidkopfs (A) zu reduzieren, da der besagte bewegliche Abschnitt (A2, A3) den besagten feststehenden Abschnitt (A1) im Wesentlichen überlappt, wobei das besagte Segment der Schneideeinheit (B1, B2, B3) jedes Abschnitts (A1, A2, A3) seinerseits Folgendes umfasst:
• eine Vielzahl von Drehmessern (H1), die auf Scheiben (H) montiert sind, welche auf einem Segment (J1) einer Stange (J) ausgerichtet sind, die am Rahmen (F1, F2, F3) des entsprechenden Abschnitts befestigt ist;
• einen Rädersatz (G), dazu geeignet, die gleichzeitige Drehung der besagten Messer (H1) zu bewirken;
**dadurch gekennzeichnet, dass**
• die besagte Stange (J), welche im Wesentlichen L-förmig ist und einen Hauptbereich (J1) umfasst, in dem die besagten Scheiben (H) und die besagten Zahnräder (G) montiert sind, waagerecht und bezüglich der Fahrtrichtung der Maschine quer angeordnet, und einen Verbindungsbereich (J2), der mit den Elementen zur Bewegungsübertragung zwischen den verschiedenen Abschnitten versehen ist, welche mit den besagten Zahnrädern (G) und mit dem Getriebe (K) verbunden sind, ebenso wie die Antriebswelle (T), die dazu geeignet ist, durch Verbindungselemente mit den Wellen (T, TA1, TA2, TA3) der angrenzenden Abschnitte verbunden zu werden.

2. Maschine nach Patentanspruch 1, **dadurch gekennzeichnet, dass** sie einen feststehenden Mittelabschnitt (A1) umfasst, der die besagte Kardanverbindung (E) sowie ein Paar beweglicher Seitenabschnitte, einen rechten (A2) und einen linken (A3), umfasst, die dazu geeignet sind, sich im Wesentlichen um 180° zu drehen.

3. Maschine nach Patentanspruch 1, **dadurch gekennzeichnet, dass** die besagten Vorrichtungen zur Verankerung am Traktor oder Mähdrescher Verfahrvorrichtungen umfassen, die dazu geeignet sind, den zusammengeklappten Kopf (A) zu zentrieren.

4. Maschine nach den Patentansprüchen 1, 2, **dadurch gekennzeichnet, dass** sich die besagten beweglichen Abschnitte (A2, A3) bezüglich des besagten, feststehenden Abschnitts (A1) um entsprechende Drehachsen (Y2, Y3) drehen, die im Wesentlichen waagerecht und zu der besagten Fahrtrichtung parallel sind.

5. Maschine nach den vorstehenden Patentansprüchen, **dadurch gekennzeichnet, dass** jeder Abschnitt (A1, A2, A3) des besagten Schneidkopfs (A) seinerseits wenigstens einen Rahmen (F1, F2, F3) umfasst, wenigstens ein Schneideeinheitsegment (B1, B2, B3), wenigstens ein Schneckensegment (C1, C2, C3) sowie Mittel oder Elemente zur Bewegungsübertragung (G, K, T) und Mittel oder Elemente zur Verbindung (D) der besagten Schneideeinheiten (B1, B2, B3) und der besagten Schnecken (C1, C2, C3) für die Übertragung der gleichzeitigen und synchronen Bewegung aus dem besagten feststehenden Abschnitt (A1) an die anderen Abschnitte (A2, A3), wenn sich der besagte Kopf (A) in der offenen Position befindet.

6. Maschine (A) nach den vorstehenden Patentansprüchen, **dadurch gekennzeichnet, dass** die besagten Abschnitte (A1, A2, A3) durch die jeweiligen Rahmen (F1, F2, F3) aneinander angelenkt sind und wobei die Drehung der besagten Abschnitte (A1, A3) durch Bewegungselemente (L2, L3) gesteuert wird, wobei die besagten Elemente (L2, L3) hydrodynamische Zylinder umfassen, die an den besagten Rahmen (F1, F2, F3) der Abschnitte (A1, A2, A3) montiert sind.

7. Maschine nach Patentanspruch 1 oder 5, **dadurch gekennzeichnet, dass** die besagten Elemente oder Getriebe (K) Übersetzungsgetriebe oder Untersetzungsgetriebe sind.

8. Maschine nach den vorstehenden Patentansprüchen, **dadurch gekennzeichnet, dass** das besagte Schneckensegment (C1, C2, C3) jedes Abschnitts (A1, A2, A3) seinerseits an dem besagten Rahmen (F1, F2, F3) des entsprechenden Abschnitts fixiert ist, und der besagte Abschnitt waagerecht und bezüglich der Fahrtrichtung der Maschine quer angeordnet ist und Ketten oder Riemen oder Elemente zur Verbindung mit der Schnecke des angrenzenden Abschnitts umfasst.

9. Maschine nach Patentanspruch 5, **dadurch gekennzeichnet, dass** die besagten Verbindungselemente oder Schnellkupplungen (D) an den Verbindungsenden zwischen aneinander angrenzenden Schneckensegmenten (C1, C2, C3) und an den Verbindungsenden zwischen angrenzenden Antriebswellen (TA1, TA2, TA3) montiert sind.

10. Maschine nach den vorstehenden Patentansprüchen, **dadurch gekennzeichnet, dass** sie einen Riemen (Z) bzw. eine Kette umfasst, der/die dazu geeignet ist, Bewegung von der Welle (TA2, TA3) an die in einem externen Abschnitt (A2, A3) positionierte Schnecke zu übertragen.

11. Maschine nach Patentanspruch 5 oder 9, **dadurch gekennzeichnet, dass** die besagte Schnellkupplung (D) Folgendes umfasst:
• einen Abschnitt (D1), der dazu geeignet ist, am Ende des Schneckensegments (C1, C2, C3) oder der Welle (T) befestigt zu werden;
• einen im Wesentlichen ebenen, kreisförmigen Abschnitt (D2), der mit dem besagten Befestigungsabschnitt eine Einheit bildet und geeignet ist, im Wesentlichen quer zu der Achse (Cx, Tx) des Schneckensegments (C1, C2, C3) oder zu der Welle (T, TA1, TA2, TA3) zu liegen;
• zwei oder mehrere, auf dem besagten kreisförmigen, ebenen Abschnitt (D2) verteilte Zähne (D3), die geeignet sind, in die Zähne der am Ende der angrenzenden Schnecke montierten Schnellkupplung (D) einzugreifen, um die axiale Drehung von einer Schnecke zur anderen zu übertragen,
und wobei, wenn die besagten Abschnitte (A1, A2, A3) in der offenen Position aufeinander ausgerichtet sind, die besagten Segmente der Schneideeinheiten (B1, B2, B3) und der Schnecken (C1, C2, C3) aller Abschnitte mittels besagter Schnellkupplungen (D) mechanisch miteinander verbunden sind.

12. Maschine nach den vorstehenden Patentansprüchen, **dadurch gekennzeichnet, dass** in der besagten offenen Position die besagten Antriebswellen (T) aller Abschnitte (A1, A2, A3) miteinander verbunden und quer zu der besagten Fahrtrichtung ausgerichtet sind, und dass die besagten Schneckenelemente (C1, C2, C3) aller Abschnitte (A1, A2, A3) miteinander verbunden und quer zu der besagten Fahrtrichtung ausgerichtet sind.

13. Maschine nach Patentanspruch 5, **dadurch gekennzeichnet, dass** die besagten Schnecken der seitlichen Abschnitte (A2, A3) nur an den Außenwänden der entsprechenden Rahmen (F1, F2, F3) angelenkt sind.

14. Maschine nach Patentanspruch 5 oder 9 oder 11, **dadurch gekennzeichnet, dass** sie einen weiteren hydraulischen oder elektrischen Motor umfasst, der mit einer der Außenseiten der äußeren Abschnitte (A2, A3) eine Einheit bildet, um die umgekehrte Bewegung für die anfängliche Verbindung der besagten Schnellkupplungen (D) zu bewirken.

## Revendications

1. Machine de coupe/faucheuse, conditionneuse, andaineuse, comprenant une tête de coupe (A) dotée de : une connexion à cardan (E) à la prise de force du tracteur ou de la moissonneuse, au moins une unité de coupe (B1, B2, B3) pourvue de couteaux rotatifs (H1) et au moins un convoyeur à vis (C1, C2, C3), **où** ladite tête de coupe (A) est divisée en au moins deux sections (A1, A2, A3) articulées entre elles à charnière, chacune avec une unité de coupe correspondante (B1, B2, B3) et un convoyeur à vis (C1, C2, C3), où au moins une section (A1) est ancrée au tracteur ou à la moissonneuse et comprend au moins une connexion à cardan (E), et où au moins une section est mobile (A2, A3), étant apte à tourner essentiellement de 180° par rapport à ladite section fixe (A1) d'une position opérationnelle d'ouverture, dans laquelle toutes lesdites sections (A1, A2, A3) sont essentiellement alignées dans une direction transversale par rapport à la direction d'avance de la machine, à une position repliée de fermeture, dans laquelle au moins une desdites sections mobiles (A2, A3) est tournée par rapport à l'autre, pour réduire la largeur totale de la tête de coupe (A) car ladite section mobile (A2, A3) résulte essentiellement superposée à ladite section fixe (A1), où ledit segment de l'unité de coupe (B1, B2, B3) de chaque section (A1, A2, A3) comprend à son tour :
• une pluralité de couteaux rotatifs (H1) assemblés sur des disques (H) qui sont alignés sur un segment (J1) d'une barre (J) bloquée au châssis (F1, F2, F3) de la section correspondante ;
• un train d'engrenages (G) indiqué pour causer la rotation simultanée desdits couteaux rotatifs (H1) ;
**caractérisée en ce que**
• ladite barre (J), qui présente une forme essentiellement en L et comprend une portion principale (J1) sur laquelle sont montés lesdits disques (H) et lesdits engrenages (G), disposés de manière horizontale et transversale par rapport à la direction d'avance de la machine, et une portion de raccordement (J2) dotée d'éléments aptes à transmettre le mouvement parmi les différentes sections, reliées auxdits engrenages (G) et à la boîte de vitesse (K), et à l'arbre de transmission (T) qui est apte à être relié aux arbres (T, TA1, TA2, TA3) des sections adjacentes au moyen d'éléments de connexion.

2. Machine selon la revendication 1, **caractérisée en ce qu'**elle comprend une section centrale fixe (A1), comprenant ladite connexion à cardan (E), et une paire de sections mobiles latérales, une de droite (A2) et une de gauche (A3), aptes à tourner essentiellement de 180°.

3. Machine selon la revendication 1, **caractérisée en ce que** lesdits dispositifs d'ancrage au tracteur ou à la moissonneuse comprennent des dispositifs de translation aptes à centrer la tête repliée.

4. Machine selon les revendications 1 et 2, **caractérisée en ce que** lesdites sections mobiles (A2, A3) tournent par rapport à ladite section fixe (A1) sur des axes de rotation correspondants (Y2, Y3) qui sont essentiellement horizontaux et parallèles à ladite direction d'avance.

5. Machine selon les revendications précédentes, **caractérisée en ce que** chaque section (A1, A2, A3) de ladite tête de coupe (A) comprend à son tour au moins un châssis (F1, F2, F3), au moins un segment de l'unité de coupe (B1, B2, B3), au moins un segment des convoyeurs à vis (C1, C2, C3) et des moyens ou engins de transmission du mouvement (G, K, T) et des engins de connexion (D) desdites unités de coupe (B1, B2, B3) et desdits convoyeurs à vis (C1, C2, C3), pour la transmission du mouvement, simultané et synchronisé, de ladite section fixe (A1) aux autres sections (A2, A3) quand ladite tête (A) se trouve en position d'ouverture.

6. Machine selon les revendications précédentes, **caractérisée en ce que** lesdites sections (A1, A2, A3) sont articulées entre elles à charnière au moyen des châssis correspondants (F1, F2, F3), et où la rotation desdites sections (A1, A3) est commandée par des engins de mouvement (L2, L3), lesdits engins (L2, L3) comprenant des cylindres fluido-dynamiques montés sur lesdits châssis (F1, F2, F3) des sections (A1, A2, A3).

7. Machine selon la revendication 1 ou 5, **caractérisée en ce que** lesdits engins ou boîtes de vitesse (K) sont des multiplicateurs ou réducteurs.

8. Machine selon les revendications précédentes, **caractérisée en ce que** ledit segment des convoyeurs à vis (C 1, C2, C3) de chaque section (A1, A2, A3) est bloqué à son tour audit châssis (F1, F2, F3) de la section correspondante, et ladite section est disposée de manière horizontale et transversale par rapport à la direction d'avance de la machine, et comprend des chaînes ou courroies ou engins pour la connexion au convoyeur à vis de la section adjacente.

9. Machine selon la revendication 5, **caractérisée en ce que** lesdits engins de connexion ou raccords rapides (D) sont montés sur les extrémités de connexion entre les segments des convoyeurs à vis adjacents (C1, C2, C3) et sur les extrémités de connexion entre les arbres de transmission adjacents (TA1, TA2, TA3).

10. Machine selon les revendications précédentes, **caractérisée en ce qu'**elle comprend une courroie (Z) ou chaîne de transmission apte à transmettre le mouvement de l'arbre (TA2, TA3) au convoyeur à vis disposé dans une section extérieure (A2, A3).

11. Machine selon la revendication 5 ou 9, **caractérisée en ce que** ledit raccord rapide (D) comprend :
• une portion (D1) indiquée pour être fixée à l'extrémité du segment des convoyeurs à vis (C1, C2, C3) ou de l'arbre (T) ;
• une partie circulaire essentiellement plane (D2) solidaire de ladite portion de fixation et apte à être essentiellement transversale par rapport à l'axe (Cx, Tx) du segment des convoyeurs à vis (C1, C2, C3) ou de l'arbre (T, TA1, TA2, TA3) ;
• deux ou plusieurs dents (D3) distribuées sur ladite partie circulaire plane (D2) et aptes à s'engrener avec les dents du raccord rapide (D) monté sur l'extrémité du convoyeur à vis adjacent, pour la transmission de la rotation axiale d'un convoyeur à vis à l'autre,
et où, quand lesdites sections (A1, A2, A3) sont alignées en position d'ouverture, lesdits segments des unités de coupe (B1, B2, B3) et des convoyeurs à vis (C1, C2, C3) de toutes les sections sont reliés entre eux mécaniquement par lesdits raccords rapides (D).

12. Machine selon les revendications précédentes, **caractérisée en ce que** dans ladite position d'ouverture, lesdits arbres de transmission (T) de toutes les sections (A1, A2, A3) sont reliés entre eux et alignés de manière transversale par rapport à ladite direction d'avance et lesdits segments des convoyeurs à vis (C1, C2, C3) de toutes les sections (A1, A2, A3) sont reliés entre eux et alignés de manière transversale par rapport à ladite direction d'avance.

13. Machine selon la revendication 5, **caractérisée en ce que** lesdits convoyeurs à vis des sections latérales (A2, A3) ne sont articulés à charnière que sur les parois extérieures des châssis correspondants (F1, F2, F3).

14. Machine selon les revendications 5, 9 ou 11, **caractérisée en ce qu'**elle comprend un moteur hydraulique ou électrique supplémentaire solidaire d'un des côtés extérieurs des sections extérieures (A2, A3) pour obtenir le mouvement inverse pour la connexion initiale desdits raccords rapides (D).
